# EUROPÄISCHE PATENTSCHRIFT

(11) **EP 0 915 360 B1**
(45) Veröffentlichungstag und Bekanntmachung des Hinweises auf die Patenterteilung: **06.05.2004**
(21) Anmeldenummer: 98120796.2
(22) Anmeldetag: 03.11.1998
(51) Int. Cl.: G02F 1/133, G02F 1/1333, G02F 1/1335

(54) **Anzeigeeinrichtung**
Display device
Dispositif d'affichage

(30) Priorität: 07.11.1997 DE 19749215; 22.10.1998 DE 19848547
(43) Veröffentlichungstag der Anmeldung: 12.05.1999
(73) Patentinhaber: Siemens Aktiengesellschaft, 80333 München (DE)
(72) Erfinder: Brandt, Peter, 64832 Babenhausen (DE); Tippl, Dietmar, 65779 Kelkheim (DE)

(56) Entgegenhaltungen:
- WO-A-99/06885
- GB-A- 2 119 554
- US-A- 4 643 525
- US-A- 4 773 735
- US-A- 4 987 289
- US-A- 5 247 374
- PATENT ABSTRACTS OF JAPAN vol. 017, no. 062 (P-1483), 8. Februar 1993 (1993-02-08) & JP 04 271323 A (FUJI PHOTO FILM CO LTD), 28. September 1992 (1992-09-28)

## Beschreibung

Die Erfindung betrifft eine Anzeigeeinrichtung, insbesondere für ein Fahrzeug, mit einem eine Flüssigkristallzelle aufweisenden Bildschirm, wobei die Flüssigkristallzelle eine vordere und eine hintere Zellenwand und eine in dem Zellenraum zwischen diesen Zellenwänden angeordnete Flüssigkristallsubstanz aufweist, und mit einer Heizvorrichtung, mittels welcher die Anzeigeeinrichtung beheizbar ist, wobei die Heizvorrichtung in dem Zellenraum der Flüssigkristallzelle unmittelbar oder mittelbar auf der vorderen und/oder der hinteren Zellenwand angeordnet ist.

Bei Flüssigkristallzellen, die zumindest zeitweise bei niedrigen Umgebungstemperaturen betrieben werden, wie es z. B. bei Anzeigen in Fahrzeugen der Fall ist, tritt das Problem auf, daß bei tiefen Temperaturen die Schaltzeiten der Flüssigkristallzellen unerwünscht groß werden, so daß damit ausgestattete Anzeigen eine erhebliche Trägheit annehmen. Um diesem Mißstand abzuhelfen, ist aus der US-A-4 773 735 (Ukrainsky Orest J et al) eine Anzeigeeinrichtung der eingangs genannten Art mit einer Heizeinrichtung bekannt.

Weiterhin ist es bei einer Anzeige bekannt, einen der Beleuchtung einer Flüssigkristallzelle in einer Flüssigkristallanzeige dienenden Lichtkasten mit einem Heizdraht zu versehen. Mittels des Heizdrahts wird die Flüssigkristallzelle erwärmt und auf einem Temperatumiveau gehalten, das es trotz niedriger Umgebungstemperaturen ermöglicht, die Flüssigkristallanzeige mit den erforderlichen kurzen Schaltzeiten betreiben zu können. Aufgrund des relativ großen Abstands zwischen Heizdraht und Flüssigkristallzelle ist eine hohe Energiezufuhr und eine starke Aufheizung des Heizdrahts notwendig, um die erforderliche Erwärmung der Flüssigkristallzelle erzeugen zu können. Darüber hinaus erwärmt der Heizdraht aufgrund seiner Anordnung in dem Lichtkasten und seiner erforderlichen hohen Wärmeabstrahlung in unerwünschter Weise die gesamte Anzeigeeinheit.

Der Erfindung liegt die Aufgabe zugrunde, eine Anzeigeeinrichtung mit einer Flüssigkristallzelle der eingangs genannten Art so zu gestalten, daß in einfacher Weise bei der Herstellung der Flüssigkristallzelle weitere Anzeigenkomponenten mitangefertigt werden können, ohne daß zusätzliche Montagemaßnahmen notwendig wären und daß die Anzeigeeinheit durch die Heizvorrichtung auch bei niedrigen Umgebungstemperaturen zuverlässig und mit nur geringen Schaltzeiten betrieben werden kann.

Diese Aufgabe wird erfindungsgemäß dadurch gelöst, daß die Heizvorrichtung eine elektrisch leitende Schicht aufweist, die in einer Ebene mit einer Front- oder einer Rückelektrode der Flüssigkristallzelle angeordnet ist, wobei die Elektrode, in deren Ebene die elektrisch leitende Schicht angeordnet ist, streifenförmig ist und daß in Zwischenräumen der Streifen längliche Abschnitte der elektrisch leitenden Schicht angeordnet sind und wobei die Ebene der Frontelektrode und die Ebene der Rückelektrode verbindende Durchkontaktierungen die länglichen Abschnitte der elektrisch leitenden Schicht mittels Verbindungsabschnitten elektrisch miteinander verbinden.

Diese Ausbildung ermöglicht es in einfacher Weise die Heizvorrichtung bei der Herstellung der Flüssigkristallzelle mit anzufertigen.

Aufgrund einer solchen Ausbildung erfolgt eine direkte und sehr schnelle Erwärmung der Flüssigkristallsubstanz, ohne daß unerwünschte Energieverluste bei einer Wärmeweiterleitung entstehen. Die von der Heizvorrichtung erzeugte Heizleistung kann daher besonders gering sein. Eine unerwünschte Aufheizung von nicht zu erwärmenden Teilen der Anzeigeeinrichtung wird ausgeschlossen.

Durch die direkte Zuordnung der Heizvorrichtung zu der Flüssigkristallsubstanz und das Fehlen einer thermisch isolierenden Schicht sind die Aufwärm- und Schaltzeiten der Anzeigeeinrichtung besonders gering. Daher eignet sich die erfindungsgemäße Anzeigeeinrichtung insbesondere auch als Tachometeranzeige in einem Kraftfahrzeug. Bei einem Tachometer sind kurze Ansprechzeiten und eine sofortige Betriebsfähigkeit besonders wichtig, da die Anzeige der gefahrenen Geschwindigkeit von hoher Bedeutung für die Verkehrssicherheit ist.

Die Herstellungskosten der Anzeigeeinheit können vorteilhaft gesenkt werden, wenn die Heizvorrichtung eine elektrisch leitende Schicht aufweist. Bei einer Bestromung kann diese Schicht dann als Widerstandsheizung funktionieren.

Insbesondere bei eine Flüssigkristallzelle aufweisenden Punkt-Matrix-Displays ist es üblich, daß die Flüssigkristallzelle eine Front- und eine Rückelektrode mit jeweils Scharen von zueinander parallelen Elektrodenstreifen aufweist, wobei die Elektrodenstreifen der Front- und der Rückelektrode kreuzweise zueinander angeordnet sind. Um bei solchen Flüssigkristallzellen eine gute und flächendeckende Heizwirkung zu erzielen, ist die Elektrode, in deren Ebene die elektrisch leitende Schicht angeordnet ist, streifenförmig und sind in Zwischenräumen der Streifen längliche Abschnitte der elektrisch leitenden Schicht angeordnet.

Um eine die Kontaktierung der streifenförmigen Elektroden nicht störende Verbindung der länglichen Abschnitte der elektrisch leitenden Schicht zu erreichen, verbinden die Durchkontaktierungen die Ebene der Frontelektrode und die Ebene der Rückelektrode elektrisch miteinander.

Insbesondere für eine Durchlichtbeleuchtung des Bildschirms ist es von besonderem Vorteil, wenn die elektrisch leitende Schicht lichtdurchlässig ist. Damit wird das von einer zur Beleuchtung dienenden Lichtquelle ausgesandte Licht zu einem sehr großen Teil genutzt, ohne daß es zu nennenswerten Lichtverlusten oder einer uneinheitlichen Ausleuchtung des Bildschirms kommt, wie es bei einer Verwendung von z. B. Heizdrähten, die zu einer Schattenbildung führen, der Fall wäre.

In einer weiteren Ausführung wird die Aufgabe dadurch gelöst, daß die Heizvorrichtung lichtreflektierend ist.

Flüssigkristallbildschirme können durch auf sie von der Vorderseite her auffallendes Umgebungs- und/oder Flutlicht beleuchtet werden. Dafür ist ein in einem hinteren Bereich oder hinter der Flüssigkristallzelle angeordneter Reflektor notwendig, der das einfallende Licht umlenkt und die angesteuerten Bereiche der Flüssigkristallzelle für einen Betrachter sichtbar macht. Durch die lichtrefektierende Ausbildung der Heizvorrichtung kann diese zusätzlich die Aufgabe des vorgenannten Reflektors übernehmen, so daß mit der Herstellung der Heizvorrichtung gleichzeitig auch der Reflektor hergestellt wird.

Gemäß einer vorteilhaften Weiterbildung der Erfindung ist die Heizvorrichtung ein Transflektor, der auf die Vorderseite der Heizvorrichtung auftreffendes Licht reflektiert und auf die Rückseite auftreffendes Licht durchläßt. Damit kann die Anzeigeeinheit bei hinreichender Umgebungshelligkeit ohne eine zusätzliche Lichtquelle abgelesen werden, wohingegen bei Umgebungsdunkelheit eine hinter der Flüssigkristallzelle angeordnete Lichtquelle zur Sichtbarmachung der Anzeige zugeschaltet werden kann.

Die Herstellungskosten der Anzeigeeinheit können vorteilhaft gesenkt werden, wenn die Heizvorrichtung eine elektrisch leitende Schicht aufweist, die bei Bestromung als Wiederstandsheizung funktioniert.

Die Anzeigeeinheit ist besonders einfach und kostengünstig im Aufbau, wenn die Flüssigkristallzelle vorzugsweise eine TN- oder STN-Zelle ist.

Man könnte sich vorstellen, die elektrische leitende Schicht der Flüssigkristallsubstanz unmittelbar benachbart anzuordnen. Jedoch ist es für eine einfache Schaltung der Flüssigkristalle mit einem möglichst geringen Energieaufwand von besonderem Vorteil, wenn die elektrisch leitende Schicht zwischen einer Front- und/oder einer Rückelektrode der Flüssigkristallzelle und der vorderen und/oder hinteren Zellenwand angeordnet ist.

Die Herstellung der Flüssigkristallzelle wird dadurch besonders vereinfacht, daß die elektrisch leitende Schicht in einer Ebene mit einer Front- und/oder einer Rückelektrode der Flüssigkristallzelle angeordnet ist, so daß damit die elektrisch leitende Schicht in einem Arbeitsgang mit einer Elektrode der Flüssigkristallzelle aufgebracht werden kann.

Man könnte sich vorstellen, die elektrisch leitende Schicht großflächig zu gestalten; jedoch ist die Heizwirkung besonders gut, wenn die elektrisch leitende Schicht mäanderförmig verläuft. Es ist auch denkbar, die elektrisch leitende Schicht nur in den Bereichen anzuordnen, in denen schaltbare Anzeigeelemente vorhanden sind. Somit kann der Einsatz zum Heizen benötigter elektrischer Energie weiter gesenkt werden, da eine Erwärmung von Bereichen der Flüssigkristallzelle, die nicht geschaltet werden und damit auch keinem negativen Einfluß niedriger Umgebungstemperaturen unterliegen, vermieden wird.

Um in Flüssigkristallzellen, die als Punkt-Matrix Displays ausgebildet sind, eine gute und flächendeckende Heizwirkung zu erzielen, ist es von besonderem Vorteil, wenn die Elektrode, in deren Ebene die elektrisch leitende Schicht angeordnet ist, streifenförmig ist und wenn in Zwischenräumen der Streifen längliche Abschnitte der elektrisch leitenden Schicht angeordnet sind.
Üblicherweise bestehen die Elektroden von Flüssigkristallzellen aus Indium-Zinn-Oxyd. Die Herstellung einer erfindungsgemäßen Anzeigeeinrichtung wird daher wesentlich vereinfacht, wenn die elektrisch leitende Schicht Indium-Zinn-Oxyd aufweist, so daß bei der Herstellung der Flüssigkristallzelle kein zusätzlicher Werkstoff gehandhabt und verarbeitet werden muß.

Gemäß einer anderen vorteilhaften Weiterbildung der Erfindung wird die Funktionssicherheit der Anzeigeeinrichtung dadurch gesteigert, daß die elektrisch leitende Schicht mit einer elektrischen Isolationsschicht abgedeckt ist. Vorteilhaft weist die Isolationsschicht Glas auf. Dieses kann z. B. als Glaspulver aufgebracht und aufgesintert oder eingeschmolzen sein.

Um eine Schädigung der Flüssigkristalle der Flüssigkristallsubstanz zu vermeiden, ist gemäß einer vorteilhaften Weiterbildung der Erfindung an die elektrisch leitende Schicht eine Wechselspannung anlegbar.

Wenn gemäß einer vorteilhaften Weiterbildung der Erfindung die vordere und/oder die hintere Zellenwand eine Glasplatte ist, dann wird sowohl eine Durchlichtbeleuchtung des Bildschirms (wenn beide Zellenwände Glasplatten sind) als auch eine einfache und kostengünstige Herstellung der Flüssigkristallzelle ermöglicht.

Von besonderem Vorteil ist es, wenn der Bildschirm zwei hintereinander angeordnete Flüssigkristallzellen aufweist, wodurch eine unerwünschte Farbwirkung der Flüssigkristallzelle kompensiert werden kann. Dafür ist es ausreichend, wenn eine der Zellen aktiv angesteuert wird und die andere Zelle lediglich passiv betrieben wird, wobei in beiden Zellen die gleiche Flüssigkristallsubstanz vorhanden ist. Es ist jedoch auch denkbar, zwei hintereinander geschaltete aktive Zellen zu verwenden, wodurch eine Darstellung sich überlagernder Informationen ermöglicht ist.

Vorzugsweise sind beide Flüssigkristallzellen TN- oder STN-Zellen. Die Notwendigkeit der Farbkompensation tritt insbesondere bei STN-Zellen auf. Zwei hintereinander angeordnete STN-Zellen, wobei eine der Zellen aktiv und die andere passiv betrieben wird, sind unter dem Namen DSTN-Zelle bekannt.

Man könnte sich vorstellen, in lediglich einer der hintereinander angeordneten Flüssigkristallzellen eine Heizvorrichtung vorzusehen. Um die Flüssigkristallsubstanz in beiden Zellen erwärmen zu können, ist dann jedoch eine hohe Heizleistung notwendig. Darüber hinaus wird die der Heizvorrichtung entferntere Flüssigkristallsubstanz ein niedrigeres Temperaturniveau aufweisen als die der Heizvorrichtung unmittelbar zugeordnete Flüssigkristallsubstanz. Aufgrund der ungleichmäßigen Erwärmung der beiden Substanzen kann es zu zusätzlichen unerwünschten Farbeffekten kommen. Daher ist es von besonderem Vorteil, wenn jede der Flüssigkristallzellen eine Heizvorrichtung aufweist.

Man könnte sich vorstellen, daß die gesamte Fläche der Flüssigkristallzelle als Darstellungsbereich für eine Anzeige genutzt wird. In vielen Fällen ist jedoch lediglich ein Teilbereich der Flüssigkristallzelle als Darstellungsbereich vorgesehen, und die anderen Bereiche der Zelle sind von einer Blende abgedeckt. Dann ist es vorteilhaft, wenn - die Erkennbarkeit der Anzeige nicht störend - die Heizvorrichtung außerhalb des Darstellungsbereichs der Flüssigkristallzelle angeordnet ist.

Gemäß einer anderen vorteilhaften Weiterbildung der Erfindung ist in dem Zellenraum der Flüssigkristallzelle ein Temperatursensor angeordnet. Damit kann in einfacher Weise über eine externe elektronische Schaltung eine den Temperaturverhältnissen in der Flüssigkristallzelle entsprechende bedarfsgerechte Ein- und Ausschaltung der Heizvorrichtung erfolgen.

In einer zwei optisch in Reihe angeordnete Flüssigkristallzellen aufweisenden DSTN-Zelle kann eine der Flüssigkristallzellen als aktive Zelle zur Darstellung einer Anzeige und die andere Flüssigkristallzelle als passive Zelle zur Farbkompensation vorgesehen sein. Dabei ist es gemäß einer anderen Weiterbildung der Erfindung von besonderem Vorteil, wenn der Bildschirm eine DSTN-Zelle mit einer aktiven Flüssigkristallzelle und mit einer passiven Flüssigkristallzelle aufweist, wobei die Heizvorrichtung in der passiven Flüssigkristallzelle angeordnet ist. Auf diese Weise ist sichergestellt, daß die Heizvorrichtung keine störenden Einflüsse auf die elektrische Ansteuerung der anzeigenden Flüssigkristallzelle ausübt.

Vorzugsweise weist dabei die passive Flüssigkristallzelle eine Frontelektrode und eine Rückelektrode auf und sind die Front- und die Rückelektrode derart mit einer Spannung beaufschlagbar, daß auf dem Bildschirm entweder helle Zeichen vor dunklem Hintergrund (Negativdarstellung) oder dunkle Zeichen vor hellem Hintergrund (Positivdarstellung) darstellbar sind. So ist ohne zusätzlichen baulichen Aufwand die - in Abhängigkeit z. B. von der Umgebungshelligkeit ― jeweils besser ablesbare Darstellungweise wählbar.

Die Erfindung wird im folgenden anhand von in der beigefügten Zeichnung dargestellten Ausführungsbeispielen näher erläutert. Dabei zeigt
- Figur 1: eine Flüssigkristallzelle mit einer Heizvorrichtung in einer Schnittansicht,
- Figur 2: eine DSTN-Zelle mit Heizvorrichtungen in einer Schnittansicht,
- Figur 3: eine Rückelektrode einer weiteren Flüssigkristallzelle in einer Vorderansicht,
- Figur 4: eine vordere und eine hintere Wand einer weiteren Flüssigkristallzelle in perspektivischer Ansicht und
- Figur 5: einen vereinfachten Schaltplan zum Ansteuern einer Flüssigkristallzelle.

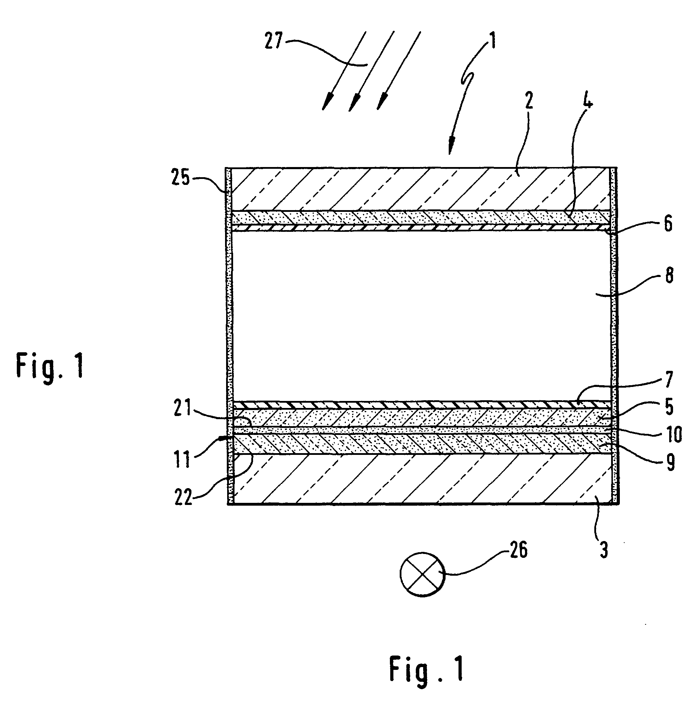

Eine in Figur 1 gezeigte Flüssigkristallzelle 1, die z. B. Bestandteil eines Punkt-Matrix-Bildschirms sein kann, weist eine vordere Wand 2 und eine hintere Wand 3 auf. Sowohl die vordere Wand 2 als auch die hintere Wand 3 werden von Glasplatten gebildet. Auf die Rückseite der vorderen Wand 2 ist eine Frontelektrode 4 z. B. aus Indium-Zinn-Oxyd aufgebracht, die von einer elektrischen Isolationsschicht 6 bedeckt wird.

Unmittelbar an der Vorderseite der hinteren Wand 3 und somit an einer Innenwandung der Flüssigkristallzelle 1 ist eine Heizvorrichtung 11 ange ordnet. Die Heizvorrichtung 11 besteht aus einer auf die hintere Wand aufgebrachten Heizschicht 9 aus z. B. Indium-Zinn-Oxyd, die mittels einer Isolationsschicht 10 aus z. B. Glaspulver elektrisch isoliert wird. Auf die Isolationsschicht 10 der Heizvorrichtung 11 ist eine Rückelektrode 5, die ebenfalls aus Indium-Zinn-Oxyd bestehen kann, aufgetragen und mit einer Isolationsschicht 7 abgeschlossen.

Zwischen der Frontelektrode 4 und der Rückelelektrode 5 ist - von diesen durch die Isolationsschichten 6, 7 getrennt ― eine Flüssigkristallsubstanz 8 angeordnet. Die Lichtdurchlässigkeit der Flüssigkristallsubstanz 8 ist zwischen einzelnen Segmenten der Frontelektrode 4 und der Rückelektrode 5 schaltbar. Mittels einer Verklebung 25 sind sowohl die vordere Wand 2 und die hintere Wand 3 der Flüssigkristallzelle 1 miteinander verbunden als auch die Flüssigkristallsubstanz 8 innerhalb der Zelle gesichert.

Mittels einer hinter der Flüssigkristallzelle 1 angeordneten Lichtquelle 26 wird die Zelle beleuchtet. Dazu ist die Heizvorrichtung 11 für auf ihre Rückseite 22 auftreffendes Licht durchlässig. Auf die Vorderseite 21 der Heizvorrichtung 11 auftreffende Lichtstrahlen, z. B. von Umgebungslicht 27, können an der Vorderseite 21 der Heizvorrichtung 11 reflektiert werden und so zur Sichtbarmachung der geschalteten Bereiche der Flüssigkristallsubstanz 8 beitragen.

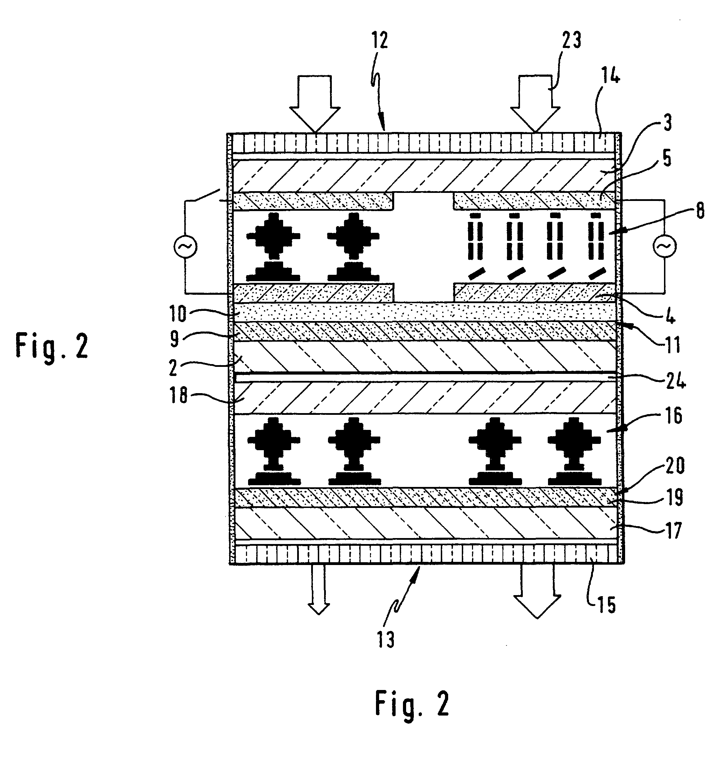

In Figur 2 ist eine DSTN-Zelle, die aus zwei hintereinander angeordneten Flüssigkristallzellen 12 und 13 besteht, dargestellt. Gleiche Bauteile sind dabei - wie auch in den folgenden Figuren - jeweils mit gleichen Bezugszeichen versehen.

An der Rückseite der Füssigkristallzelle 12 ist ein Polarisator 14 und an der Vorderseite der Flüssigkristallzelle 13 ein Polarisator 15 angeordnet. Eine vordere Wand 2 und eine hintere Wand 3 der Flüssigkristallzelle 12 wird ebenso wie eine vordere Wand 17 und eine hintere Wand 18 der Flüssigkristallzelle 13 jeweils von einer Glasplatte gebildet. Zwischen den Wänden 2 und 18 ist ein schmaler Luftspalt 24 angeordnet.

Die Flüssigkristallzelle 13 ist eine passive Zelle, die lediglich einer Kompensation eines unerwünschten Farbeffekts dient. Eine Flüssigkristallsubstanz 16 der Zelle 13 ist daher schematisch in nicht angesteuertem Zustand eingezeichnet. Hingegen ist die Flüssigkristallzelle 12 eine aktive Zelle. Eine zwischen Abschnitten einer Frontelektrode 4 und Abschnitten einer Rückelektrode 5 angeordnete Flüssigkristallsubstanz 8 ist im rechten Bereich der Darstellung der Figur 2 angesteuert eingezeichnet, was durch die symbolisch eingezeichnete angelegte Wechselspannung verdeutlicht wird. Im linken Bereich der Zelle 12 angeordnete Flüssigkristallsubstanz liegt hingegen in nicht angesteuertem Zustand vor.

Sowohl die aktive Flüssigkristallzelle 12 als auch die passive Flüssigkristallzelle 13 sind jeweils mit einer Heizvorrichtung 11 bzw. 20 versehen. Die Heizvorrichtung 20 besteht aus einer auf die vordere Wand 17 der Zelle 13 aufgetragenen Heizschicht 19. Da die Zelle 13 nicht angesteuert wird, ist eine zusätzliche elektrische Isolationsschicht auf der Heizschicht 19 nicht notwendig. Hingegen ist eine auf die vordere Wand 2 der Zelle 12 aufgetragene Heizschicht 9 mit einer Isolationsschicht 10 versehen, wodurch eine elektrische Entkopplung der Heizvorrichtung 11 von der Frontelektrode 4 erreicht wird.

Eine Beleuchtung der Flüssigkristallzellen 12, 13 erfolgt mittels einer Durchlichtbeleuchtungseinrichtung, die durch Pfeile 23 symbolisiert wird, wobei an den eine gleiche Breite aufweisenden Pfeilen im rechten Bereich der Darstellung der Figur 2 zu erkennen ist, daß der angesteuerte Zellenbereich lichtdurchlässig ist, wohingegen der nicht angesteuerte Zellenbereich den Lichtdurchgang sperrt (vgl. unterschiedliche Pfeilbreiten im linken Bereich der Darstellung der Figur 2).

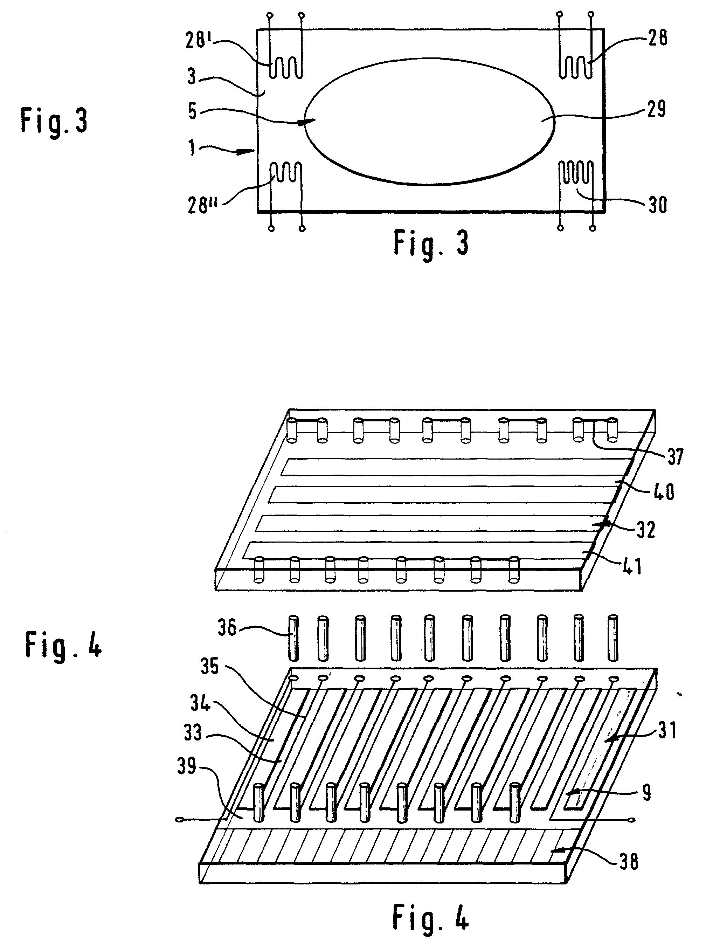

In Figur 3 ist eine hintere Wand 3 mit einer Rückelektrode 5 einer Flüssigkristallzelle 1 dargestellt, die zur Anzeige von Informationen in einem ovalen Darstellungsbereich 29 ausgebildet ist. Außerhalb des Darstellungsbereichs 29 gelegene Bereiche der Flüssigkristallzelle 1 sind von einer hier nicht dargestellten Blende abgedeckt. Die Flüssigkristallzelle 1 kann z. B. zur Anzeige der Fahrgeschwindigkeit eines Kraftfahrzeugs dienen und in einer Armaturentafel oder einem Kombinationsinstrument des Fahrzeugs eingebaut sein. In drei Eckbereichen der rechteckigen, von einer Glasplatte gebildeten hinteren Wand 3 sind Heizvorrichtungen 28, 28', 28" in derselben Ebene wie die Rückelektrode 5 angeordnet. In dem vierten Eckbereich der hinteren Wand 3 befindet sich in der Ebene der Heizvorrichtungen 28, 28', 28" und der Rückelektrode 5 ein Temperatursensor 30. Der Temperatursensor 30 bewirkt über eine externe, hier nicht dargestellte elektrische Schaltung ein Ein- und Ausschalten der Heizvorrichtungen 28, 28', 28", so daß der Zelleninnenraum der Flüssigkristallzelle 1 auf einer optimalen Betriebstemperatur gehalten wird.

Eine jeweils von Glasplatten gebildete vordere Wand 39 und hintere Wand 40 einer Flüssigkristallzelle eines Punkt-Matrix-Displays zeigt Figur 4. Die vordere Wand 39 weist neben einer streifenförmig ausgebildeten Frontelektrode 31 einen Anschlußbereich 38 zur elektrischen Kontaktierung auf. Zwischen Streifen 34 der Frontelektrode 31 sind in Zwischenräumen 33 längliche Abschnitte 35 einer Heizvorrichtung 9 angeordnet. Senkrecht zu den Streifen 34 der Frontelektrode 31 befinden sich auf der hinteren Wand 40 Streifen 41 einer Rückelektrode 32. Durchkontaktierungen 36 zwischen den länglichen Abschnitten 35 der Heizvorrichtung 9 auf der vorderen Wand 39 und Verbindungsabschnitten 37 auf der hinteren Wand 40 bewirken eine durchgehende elektrische Verbindung innerhalb der Heizvorrichtung 9.

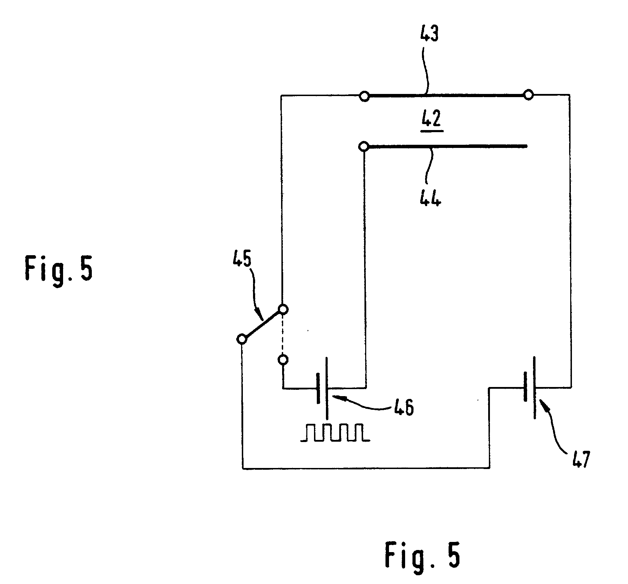

Von einer DSTN-Zelle, die eine aktive Flüssigkristallzelle zur Informationsdarstellung und eine passive Flüssigkristallzelle für eine Positiv-/Negativ-Umschaltung einer Anzeigevorrichtung aufweist, ist in Figur 5 vereinfacht die passive Flüssigkristallzelle 42 mit einer Frontelektrode 43 und einer Rückelektrode 44 dargestellt. Es ist erkennbar, daß mittels eines Umschalters 45 wahlweise über eine Energieversorgung 46 die Elektroden 43, 44 der Flüssigkristallzelle 42 mit einer Treiber-Spannung (Umschalter 45 in gestrichelt dargestellter Position) oder die Frontelektrode 43 mit einer Heizspannung einer Energieversorgung 47 (Umschalter 45 in durchgezogen dargestellter Position) beaufschlagbar sind/ist. Mit der Treiber-Spannung erfolgt eine Positiv-/Negativ-Umschaltung der DSTN-Zelle; diese Umschaltung ist nur bei abgeschalteter Heizung möglich. Die Heizvorrichtung wird in diesem Ausführungsbeispiel von der Frontelektrode 43 gebildet.

## Patentansprüche

1. Anzeigeeinrichtung, insbesondere für ein Fahrzeug, mit einem eine Flüssigkristallzelle aufweisenden Bildschirm, wobei die Flüssigkristallzelle eine vordere und eine hintere Zellenwand und eine in dem Zellenraum zwischen diesen Zellenwänden angeordnete Flüssigkristallsubstanz aufweist, und mit einer Heizvorrichtung mittels welcher die Anzeigeeinrichtung beheizbar ist, wobei die Heizvorrichtung in dem Zellenraum der Flüssigkristallzelle unmittelbar oder mittelbar auf der vorderen und/oder der hinteren Zellenwand angeordnet ist **dadurch gekennzeichnet, daß** die Heizvorrichtung eine elektrisch leitende Schicht (9) aufweist, die in einer Ebene mit einer Front- (31) oder einer Rückelektrode (32) der Flüssigkristallzelle angeordnet ist, wobei die Elektrode (31), in deren Ebene die elektrisch leitende Schicht (9) angeordnet ist, streifenförmig ist und daß in Zwischenräumen (33) der Streifen (34) längliche Abschnitte (35) der elektrisch leitenden Schicht (9) angeordnet sind und wobei die Ebene der Frontelektrode (31) und die Ebene der Rückelektrode (32) verbindende Durchkontaktierungen (36) die länglichen Abschnitte (35) der elektrischen Schicht (9) mittels Verbindungsabschnitten (37) elektrisch miteinander verbinden.

2. Anzeigeeinrichtung nach Anspruch 1, **dadurch gekennzeichnet, daß** die elektrisch leitende Schicht (9; 19) lichtdurchlässig ist.

3. Anzeigeeinrichtung nach Anspruch 1, **dadurch gekennzeichnet, dass** die Heizvorrichtung (11) lichtreflektierend ist.

4. Anzeigeeinrichtung nach Anspruch 3, **dadurch gekennzeichnet, daß** die Heizvorrichtung (11) ein Transflektor ist, der auf die Vorderseite (21) der Heizvorrichtung (11) auftreffendes Licht reflektiert und auf die Rückseite (22) auftreffendes Licht durchläßt.

5. Anzeigeeinrichtung nach einem der vorhergehenden Ansprüche, **dadurch gekennzeichnet, daß** die Flüssigkristallzelle (1; 12, 13; 42) eine TN- oder STN-Zelle ist.

6. Anzeigeeinrichtung nach einem der vorhergehenden Ansprüche, **dadurch gekennzeichnet, daß** die elektrisch leitende Schicht (9; 19) zwischen einer Front- (4) und/oder einer Rückelektrode (5) der Flüssigkristallzelle (1; 12) und der vorderen (2) und/oder hinteren (3) Zellenwand angeordnet ist.

7. Anzeigeeinrichtung nach einem der Ansprüche 5 oder 6, **dadurch gekennzeichnet, daß** die elektrisch leitende Schicht (9; 19) mäanderförmig verläuft.

8. Anzeigeeinrichtung nach Anspruch 7, **dadurch gekennzeichnet, daß** die Elektrode (Frontelektrode 31), in deren Ebene die elektrisch leitende Schicht (9) angeordnet ist, streifenförmig ist und daß in Zwischenräumen (33) der Streifen (34) längliche Abschnitte (35) der elektrisch leitenden Schicht (9) angeordnet sind.

9. Anzeigeeinrichtung nach einem der vorhergehenden Ansprüche, **dadurch gekennzeichnet, daß** die elektrisch leitende Schicht (9; 19) Indium-Zinn-Oxyd aufweist.

10. Anzeigeeinrichtung nach einem der vorhergehenden Ansprüche, **dadurch gekennzeichnet, daß** die elektrisch leitende Schicht (9) mit einer elektrischen Isolationsschicht (10) abgedeckt ist.

11. Anzeigeeinrichtung nach Anspruch 10, **dadurch gekennzeichnet, daß** die Isolationsschicht (10) Glas aufweist.

12. Anzeigeeinrichtung nach einem der vorhergehenden Ansprüche, **dadurch gekennzeichnet, daß** an die elektrisch leitende Schicht (9; 19) eine Wechselspannung anlegbar ist.

13. Anzeigeeinrichtung nach einem der vorhergehenden Ansprüche, **dadurch gekennzeichnet, daß** die vordere (2; 17; 39) und/oder die hintere (3; 18; 40) Zellenwand eine Glasplatte ist.

14. Anzeigeeinrichtung nach einem der vorhergehenden Ansprüche, **dadurch gekennzeichnet, daß** der Bildschirm zwei hintereinander angeordnete Flüssigkristallzellen (12, 13) aufweist.

15. Anzeigeeinrichtung nach Anspruch 14, **dadurch gekennzeichnet, daß** beide Flüssigkristallzellen (12, 13) TN- oder STN-Zellen sind.

16. Anzeigeeinrichtung nach einem der Ansprüche 14 und 16, **dadurch gekennzeichnet, daß** jede der Flüssigkristallzellen (12, 13) eine Heizvorrichtung (11, 20) aufweist.

17. Anzeigeeinrichtung nach einem der vorhergehenden Ansprüche, **dadurch gekennzeichnet, daß** die Heizvorrichtung (28) außerhalb eines Darstellungsbereichs (29) der Flüssigkristallzelle (1) angeordnet ist.

18. Anzeigeeinrichtung nach einem der vorhergehenden Ansprüche, **dadurch gekennzeichnet, daß** in dem Zellenraum der Flüssigkristallzelle (1; 12, 13; 42) ein Temperatursensor (30) angeordnet ist.

19. Anzeigeeinrichtung nach einem der vorhergehenden Ansprüche, **dadurch gekennzeichnet, daß** der Bildschirm eine DSTN-Zelle mit einer aktiven Flüssigkristallzelle (12) und mit einer passiven Flüssigkristallzelle (13) aufweist, wobei die Heizvorrichtung (20) in der passiven Flüssigkristallzelle (13) angeordnet ist.

20. Anzeigeeinrichtung nach Anspruch 19, **dadurch gekennzeichnet, daß** die passive Flüssigkristallzelle eine Frontelektrode und eine Rückelektrode aufweist und daß die Front- und die Rückelektrode derart mit einer Spannung beaufschlagbar sind, daß auf dem Bildschirm entweder helle Zeichen vor dunklem Hintergrund oder dunkle Zeichen vor hellem Hintergrund darstellbar sind.

## Claims

1. Display device, in particular for a vehicle, with a viewing screen having a liquid crystal cell, the liquid crystal cell having a front cell wall and a rear cell wall and a liquid crystal substance arranged in the cell space between these cell walls, and with a heating device by means of which the display device can be heated, wherein the heating device is arranged in the cell space of the liquid crystal cell directly or indirectly on the front cell wall and/or the rear cell wall, **characterized in that** the heating device has an electrically conducting layer (9) which is arranged in a plane with a front electrode (31) or a rear electrode (32) of the liquid crystal cell, the electrode (31), in the plane of which the electrically conducting layer (9) is arranged, being in the shape of a strip, and **in that** elongated segments (35) of the electrically conducting layer (9) are arranged in interspaces (33) of the strips (34), and plated-through holes (36) connecting the plane of the front electrode (31) and the plane of the rear electrode (32) electrically interconnecting the elongated segments (35) of the electrical layer (9) by means of connecting sections (37).

2. Display device according to Claim 1, **characterized in that** the electrically conducting layer (9; 19) is optically transparent.

3. Display device according to Claim 1, **characterized in that** the heating device (11) is optically reflective.

4. Display device according to Claim 3, **characterized in that** the heating device (11) is a transflector which reflects light impinging on the front side (21) of the heating device (11) and transmits light impinging on the rear side (22).

5. Display device according to one of the preceding claims, **characterized in that** the liquid crystal cell (1; 12, 13; 42) is a TN cell or an STN cell.

6. Display device according to one of the preceding claims, **characterized in that** the electrically conducting layer (9; 19) is arranged between a front electrode (4) and/or a rear electrode (5) of the liquid crystal cell (1; 12) and the front cell wall (2) and/or rear cell wall (3).

7. Display device according to either of Claims 5 and 6, **characterized in that** the electrically conducting layer (9; 19) extends in a meandering fashion.

8. Display device according to Claim 7, **characterized in that** the electrode (front electrode 31), in the plane of which the electrically conducting layer (9) is arranged, is in the shape of a strip, and **in that** elongated segments (35) of the electrically conducting layer (9) are arranged in interspaces (33) of the strips (34).

9. Display device according to one of the preceding claims, **characterized in that** the electrically conducting layer (9; 19) has indium tin oxide.

10. Display device according to one of the preceding claims, **characterized in that** the electrically conducting layer (9) is covered with an electric insulating layer (10).

11. Display device according to Claim 10, **characterized in that** the insulating layer (10) has glass.

12. Display device according to one of the preceding claims, **characterized in that** an AC voltage can be applied to the electrically conducting layer (9; 19).

13. Display device according to one of the preceding claims, **characterized in that** the front cell wall (2; 17; 39) and/or the rear cell wall (3; 18; 40) is a glass plate.

14. Display device according to one of the preceding claims, **characterized in that** the viewing screen has two liquid crystal cells (12, 13) arranged in series.

15. Display device according to Claim 14, **characterized in that** the two liquid crystal cells (12, 13) are TN cells or STN cells.

16. Display device according to either of Claims 14 and 16, **characterized in that** each of the liquid crystal cells (12, 13) has a heating device (11, 20).

17. Display device according to one of the preceding claims, **characterized in that** the heating device (28) is arranged outside a display region (29) of the liquid crystal cell (1).

18. Display device according to one of the preceding claims, **characterized in that** a temperature sensor (30) is arranged in the cell space of the liquid crystal cell (1; 12, 13; 42).

19. Display device according to one of the preceding claims, **characterized in that** the viewing screen has a DSTN cell with an active liquid crystal cell (12) and with a passive liquid crystal cell (13), the heating device (20) being arranged in the passive liquid crystal cell (13).

20. Display device according to Claim 19, **characterized in that** the passive liquid crystal cell has a front electrode and a rear electrode, and **in that** it is possible to apply a voltage to the front electrode and the rear electrode in such a way that it is possible to display on the viewing screen either bright characters against a dark background or dark characters against a bright background.

## Revendications

1. Dispositif d'affichage, destiné notamment à un véhicule, avec un écran comprenant une cellule à cristaux liquides, la cellule à cristaux liquides comprenant une paroi de cellule avant et une paroi de cellule arrière, ainsi qu'une substance à cristaux liquides disposée dans le compartiment de cellule, entre les parois de la cellule et avec un système de chauffage permettant de chauffer le dispositif d'affichage, le système de chauffage étant disposé directement ou indirectement sur la paroi avant et/ou sur la paroi arrière de la cellule, dans le compartiment de la cellule à cristaux liquides, **caractérisé en ce que** le système de chauffage présente une couche conductrice d'électricité (9) laquelle est disposée sur un même plan qu'une électrode frontale (31) ou qu'une électrode dorsale (32) de la cellule à cristaux liquides, l'électrode (31) sur la plan de laquelle est disposée la couche conductrice d'électricité (9) présentant la forme d'une bande et **en ce que** des sections longitudinales (35) de la couche conductrice d'électricité (9) sont disposées entre des interstices (33) entre les bandes (34), des connexions transversales (36) qui relient le plan de l'électrode frontale (31) et le plan de l'électrode dorsale (32) reliant les sections longitudinales (35) de la couche électrique (9) à l'aide de segments de liaison (37).

2. Dispositif d'affichage selon la revendication 1, **caractérisé en ce que** la couche conductrice d'électricité (9 ; 19) est transparente.

3. Dispositif d'affichage selon la revendication 1, **caractérisé en ce que** le système de chauffage (11) réfléchit la lumière.

4. Dispositif d'affichage selon la revendication 3, **caractérisé en ce que** le système de chauffage (11) est un transflecteur qui réfléchit la lumière qui arrive sur la partie avant (21) du système de chauffage (11) et laisse passer la lumière arrivant sur la partie arrière (22).

5. Dispositif d'affichage selon l'une quelconque des revendications précédentes, **caractérisé en ce que** la cellule à cristaux liquides (1 ; 12, 13 ; 42) est une cellule TN ou une cellule STN.

6. Dispositif d'affichage selon l'une quelconque des revendications précédentes, **caractérisé en ce que** la couche conductrice d'électricité (9 ; 19) est disposée entre une électrode frontale (4) et/ou une électrode dorsale (5) de la cellule à cristaux liquides (1 ; 12) et la paroi avant (2) et/ou la paroi arrière (3) de la cellule.

7. Dispositif d'affichage selon l'une quelconque des revendications 5 ou 6, **caractérisé en ce que** la couche conductrice d'électricité (9 ; 19) s'étend en forme de méandres.

8. Dispositif d'affichage selon la revendication 7, **caractérisé en ce que** l'électrode (électrode frontale 31) sur le plan de laquelle est disposée la couche conductrice d'électricité (9) présente la forme d'une bande et **en ce que** des sections longitudinales (35) de la couche conductrice d'électricité (9) sont disposées dans des interstices (33) entre les bandes (34).

9. Dispositif d'affichage selon l'une quelconque des revendications précédentes, **caractérisé en ce que** la couche conductrice d'électricité (9 ; 19) comprend de l'oxyde d'étain -d'indium.

10. Dispositif d'affichage selon l'une quelconque des revendications précédentes, **caractérisé en ce que** la couche conductrice d'électricité (9) est recouverte d'une couche d'isolation électrique (10).

11. Dispositif d'affichage selon la revendication 10, **caractérisé en ce que** la couche d'isolation (10) comprend du verre.

12. Dispositif d'affichage selon l'une quelconque des revendications précédentes, **caractérisé en ce qu'**une tension alternative est applicable sur la couche conductrice d'électricité (9 ; 19).

13. Dispositif d'affichage selon l'une quelconque des revendications précédentes, **caractérisé en ce que** la paroi avant (2 ; 17 ;39) et/ou la paroi arrière (3 ; 18 ; 40) de la cellule est une plaque de verre.

14. Dispositif d'affichage selon l'une quelconque des revendications précédentes, **caractérisé en ce que** l'écran comprend deux cellules à cristaux liquides (12, 13) disposées l'une derrière l'autre.

15. Dispositif d'affichage selon la revendication 14, **caractérisé en ce que** les deux cellules à cristaux liquides (12, 13) sont des cellules TN ou des cellules STN.

16. Dispositif d'affichage selon l'une quelconque des revendications 14 et 15, **caractérisé en ce que** chacune des cellules à cristaux liquides (12 , 13) comprend un système de chauffage (11, 20).

17. Dispositif d'affichage selon l'une quelconque des revendications précédentes, **caractérisé en ce que** le système de chauffage (28) est disposé à l'extérieur d'une zone de reproduction (29) de la cellule à cristaux liquides (1) ;

18. Dispositif d'affichage selon l'une quelconque des revendications précédentes, **caractérisé en ce qu'**un capteur de températures (30) est disposé dans le compartiment de la cellule à cristaux liquides (1 ; 12, 13 ; 42).

19. Dispositif d'affichage selon l'une quelconque des revendications précédentes, **caractérisé en ce que** l'écran comprend une cellule DSTN avec une cellule à cristaux liquides active (12) et avec une cellule à cristaux liquides passive (13), le système de chauffage (20) étant disposé dans la cellule à cristaux liquides passive.

20. Dispositif d'affichage selon la revendication 19, **caractérisé en ce que** la cellule à cristaux liquides passive comprend une électrode frontale et une électrode dorsale et **en ce qu'**une tension est applicable sur l'électrode frontale et sur l'électrode dorsale, de façon à ce que, soit des caractères clairs sur fond foncé, soit des caractères foncés sur fond clair puissent être reproduits sur l'écran.
